# EUROPEAN PATENT SPECIFICATION

(11) **EP 0 923 309 B1**
(45) Date of publication and mention of the grant of the patent: **14.05.2003**
(21) Application number: 97921641.3
(22) Date of filing: 12.05.1997
(51) Int. Cl.: A23K 1/00

(54) **DRY FISH FEED AND METHOD OF PREPARING SAME**
TROCKENES FISCHFUTTER UND VERFAHREN ZU SEINER HERSTELLUNG
ALIMENTS SECS POUR POISSONS ET LEUR PROCEDE DE PREPARATION

(30) Priority: 10.05.1996 DK 56496
(43) Date of publication of application: 23.06.1999
(73) Proprietor: Aquatic Feeds ApS, 8400 Ebeltoft (DK)
(72) Inventor: BECK-LAURITZEN, Peter, 8400 Ebeltoft (DK)
(74) Representative: Plougmann & Vingtoft A/S
(86) International application number: DK9700217
(87) International publication number: WO97042836

(56) References cited:
- EP-A- 0 165 663
- EP-A- 0 209 510
- WO-A-92/16115
- WO-A-96/01058
- FR-A- 2 572 625
- GB-A- 1 604 381
- GB-A- 2 247 604
- PATENT ABSTRACTS OF JAPAN vol. 18, no. 562 (C-1265), 27 October 1994 & JP 06 205647 A (NISSHIN FLOUR MILLING CO LTD), 26 July 1994,
- DATABASE WPI Week 8324 Derwent Publications Ltd., London, GB; AN 83-57467K XP002023314 & JP 58 076 075 A (KATAYAMA T) , 9 May 1983
- DATABASE WPI Week 8517 Derwent Publications Ltd., London, GB; AN 85-102393 XP002023315 & JP 60 047 643 A (Q.P. CORP.) , 15 March 1985 & PATENT ABSTRACTS OF JAPAN vol. 9, no. 175 (C-292), 19 July 1985 & JP 60 047643 A (KEWPIE KK), 15 March 1985,
- PATENT ABSTRACTS OF JAPAN vol. 18, no. 86 (C-1165), 14 February 1994 & JP 05 292895 A (NISSHIN FLOUR MILLING CO), 9 November 1993,
- PATENT ABSTRACTS OF JAPAN vol. 16, no. 528 (C-1001), 29 October 1992 & JP 04 200375 A (DAICEL CHEM IND LTD), 21 July 1992,

## Description

### FIELD OF INVENTION

The present invention relates to the provision of a novel, nutritionally optimized dry fish feed for use in farming of carnivorous fish, the composition of the feed essentially corresponding to that of the natural prey of carnivorous fish.

### TECHNICAL BACKGROUND AND PRIOR ART

Fish can be divided into two major groups, carnivores and herbivores, according to the type of feed they consume. Carnivorous fish include predatory fish such as salmonoids (trout, salmon) and eel which are reared in large quantities in aquacultural operations in many countries. Major problems associated with aquaculture are (i) the requirement to optimize the feed composition with respect to a high growth rate of the fish and a high feed conversion rate and (ii) to prevent that the fish are attacked by infectious diseases and (iii) to minimize the level of contamination with organic matter of the rearing water environments (tanks, ponds or fenced sea areas) and recipients for such water.

The natural fish prey for carnivorous fish such as salmonoids has with respect to the major components, the following typical composition on dry weight basis: 45-90 wt% of protein, 20-50 wt% of lipids, 5-12 wt% of ashes and nitrogen free extracts (NFE).

From the above it can be seen that the variation in composition of the natural prey for carnivorous fish is relatively large. This is i.a. caused by the fact that in smaller prey fish the volume of the stomach constitutes a relatively larger proportion of the total weight as compared to that in larger prey fish. Additionally, seasonal fluctuations will affect the composition of the fish prey which e.g. implies that the lipid content is at the highest level in the autumn and at the lowest level in the spring.

Commercially available dry feed compositions for carnivorous fish have a content of nutrients which differs significantly from that of the natural prey fish. Thus, such feed compositions commonly have a relatively high content of carbohydrates which are incorporated to act as a binding/structure forming agent in the pellets/granules of the feed. The carbohydrate sources are typically starch-containing cereals such as wheat or cereal starches.

The conventional processes for preparing such types of fish feed normally include an extrusion pelleting process whereby the carbohydrate-containing feed mixture is pre-cooked at temperatures above the starch gelatinization temperature followed by an extrusion step wherein the feed mixture is cooked together with the other feed ingredients at a temperature above 100°C, resulting in solid, dry feed pellets. In the known methods of manufacturing dry fish feed, carbohydrates in amounts from about 8 to about 20 wt% is an ingredient which in the industry is considered as required to obtain a fish feed having a sufficient long term stability towards disintegration and deformation during storage and distribution.

Additionally, currently available fish feed compositions have a relatively low content of protein and lipids. Thus, DE 3707032 A1 discloses a water insoluble extruded fish feed for aquarium fish containing 30-50 wt% protein, 5-15 wt% lipid, up to 10 wt% carbohydrates and having a moisture content in the range of 5-15 wt%. NO 147858 discloses a fish feed composition in the form of granules having a maximum dimension of 300-2000 µm and consisting of 30-80 wt% protein and up to 40 wt% carbohydrate, 0-20 wt% lipid and at the most 15 wt% vitamins and minerals.

In CH 627 623 is disclosed a fish feed for fresh water and salt water fish which contains less than 5-10 wt% of lipid.

As an exception to the above mentioned fish feed compositions which all contain a substantial proportion of carbohydrate, the fish feed disclosed in EP 0 292 052 A2 consists of 80-100 wt% protein raw material and 0-20 wt% of a bonding agent consisting of fish oil and lecithin.

However, none of the above fish feed compositions have a nutritionally optimized composition i.e. a composition essentially corresponding to that of the natural feed of carnivorous fish. Rather, the composition of commercially available fish feed is selected so as to fulfil technological requirements e.g. to provide structure-forming or binding agents to allow extrusion and granulation of the product mixture and the requirement for the finished feed product to have a form and structure that is stable towards deformation during storage and transportation.

It is known that the composition of currently available feed compositions for carnivorous fish is associated with several nutritional problems. Thus, a high content of carbohydrates may result in a diabetes-like condition, enlarged fatty liver and a reduced metabolism of proteins.

Recently, it has been attempted to raise the lipid content of fish feed in order to increase the energy content of the feed. As one example, WO 96/01058 discloses a feed composition with a very low content of carbohydrate and containing about 27 wt% of fish oil which is added during the manufacturing process by spraying it onto a mixture of pressed, wet fish material and stick water. The resulting mixture is formed into pellets by means of an extruder/pellet press process. In WO 92/16115 is disclosed a "weaning" fish feed without added carbohydrates and comprising micronised fish meal of a selected, high quality, 15-35 wt% marine fat, vitamins, minerals and gel-forming glue water which is mixed and formed into roe-like particles by an agglomerating step by means of cutting forces (e.g. using rotating plates or knives or a fluidising technique) and bonding agents. However, when administering the resulting feed particles to fish fry breeding vessels, a disintegration of the particles occurs whereby 10-20% of the feed is leaked to the surrounding water after 30 minutes, which contributes to pollution of the water.

The above processes of manufacturing fish feed having a relatively high content of lipid either requires an extrusion step involving that the feed mixture is subjected to heating above 100°C inevitably resulting in a reduction of the nutritional value of the protein component, or the use of complicated process steps such as micronising and agglomerating equipment.

A well-known problem with fish feed is the disintegration or dissolution of the feed particles after administration to the breeding vessels or ponds which results in loss of feed and pollution of the water. This problem is particularly pronounced when the carbohydrate content is low.

Thus, it is apparent that dry fish feed for carnivorous fish having a composition essentially corresponding to that of the natural prey and which can be manufactured by a simple process to provide feed having a high nutritional value in the form of particles which have a sufficiently coherent structure to prevent disintegration hereof in the water has not hitherto been available. The present invention provides such a simple process and feed compositions.

Thus, the advantages obtained with the fish feed composition according to the present invention include:
- optimized feed uptake resulting in an increased growth rate of the fish, improved health and enhancement of defence mechanisms towards disease attacks.
- eliminating malnutrition and adverse conditions such as fatty liver and diabetes-like condition,
- provision of a high energy feed for growing fish, resulting in a more cost-effective feed, since the coefficient of utilisation (i.e. the feed conversion rate) will be higher as compared to that of a feed with a high carbohydrate content and/or low lipid content,
- a reduced amount of faecal matter/waste products in the rearing environment and recipient water as a result of a better feed conversion and essentially no disintegration in water of the feed particles, thereby also providing a highly desirable environmental benefit.

### SUMMARY OF THE INVENTION

Accordingly, the invention relates in a first aspect to a nutritionally optimized dry fish feed composition for carnivorous fish, the feed having a composition essentially corresponding to that of the natural prey for said fish, the feed comprising 30-70 wt% of protein, 20-50 wt% of lipid, 0-10 wt% of carbohydrates and a water-insoluble emulsifying agent, the amounts of the components being based on the total weight of the feed.

In a further aspect there is also provided a method of preparing such a fish feed composition, the method comprising the steps of
(i) mixing a lipid and a wetting agent and/or an emulsifying agent,
(ii) adding to said mixture the protein in the form of an aqueous suspension and/or solution,
(iii) subjecting the resulting mixture to emulsifying conditions, and
(iv) subsequently forming the resulting emulsion into particles, which are subjected to cooling and, if required, drying to obtain the feed composition.

In a still further aspect, the invention relates to a method of preparing the above fish feed composition, the method comprising the steps of
(i) preparing an emulsion comprising a lipid, an aqueous phase and a water-insoluble emulsifying agent,
(ii) combining the emulsion with at least one dry fish feed ingredient to obtain a fish feed mixture, and
(iii) subsequently forming the resulting emulsion into particles, which are subjected to cooling and, if required, drying to obtain the feed composition.

### DETAILED DISCLOSURE OF THE INVENTION

The present invention provides, as mentioned above, a dry fish feed composition for carnivorous fish, the feed having, with respect to the major dietary components, a composition essentially corresponding to that of the natural prey for such fish.

The feed is dry, i.e. it has a moisture content which is preferably at the most 15 wt%, such as at the most 10 wt%.

In one advantageous embodiment the feed composition has a total content of protein and lipid which is at the most 85 wt% such as at the most 80 wt%. One interesting aspect of the invention is the possibility of adjusting the ratio between protein and lipid, thereby providing compositions adapted to particular customer demands, e.g. compositions specifically adapted to particular species or life stages of fish. In useful embodiments the weight ratio between lipid and protein is in the range of 1:1 to 1:5 such as e.g. in the range of 1:2 to 1:3.

An interesting embodiment of the invention is a fish feed composition with a high energy content resulting in a more cost-effective feed, as the coefficient of utilisation (feed conversion rate) is higher compared to that of a feed with a high carbohydrate content and/or low lipid content. Thus, in one preferred embodiment, the lipid content is in the range of 20-40 wt%. The lipid can be any vegetable lipid and/or marine lipid which may either be solid or liquid at room temperature. One presently preferred lipid is a fish oil, including an at least partially hydrogenated fish oil. However, the lipid may also be selected from other sources such as oils and fats from other animal sources and vegetable oils and fats.

In one preferred embodiment, the protein content of the feed is 40-65%, preferably 45-60 wt% and more preferably 50-60 wt-%. The protein source may be a liquid or dry non-milk protein source, such as stick water (also referred to as size), fish meal, blood meal, meat meal, bone meal, liquid or dry yeast or proteins derived from a vegetable source including as examples soy beans, peas, maize or cereals.

Evidently, a protein source of marine origin has an amino acid composition which is nutritionally appropriate for growing fish, i.e. such a protein contains essential amino acids in the appropriate amounts. This may not be the case with other protein sources, and it may therefore, when non-marine proteins are used in accordance with the invention, be required to supplement the feed composition with appropriate amounts of certain essential amino acids with respect to which the selected protein is deficient, including as examples tryptophan and methionine.

A currently preferred protein source is a marine protein source such as fish meal or fish material having a water content in excess of 10 wt% including the semi-manufactured press cake material from fish meal production and stick water also from the processing of fish raw material for fish meal production. However, the quality of such protein materials may vary considerably. In certain fish feed compositions e.g. the so-called "weaning" feed compositions, it is preferred to select fish protein sources of a high quality e.g. having a low content of soluble nitrogen components, a low content of biogenic amines, a low content of carbohydrate, a low content of lipids or containing lipids having a low degree of rancidity. Furthermore, the digestibility of the protein should be high such as at least 90%. Therefore, in one aspect of the present invention the feed composition contains such a high quality marine protein source.

Adverse conditions in fish such as fatty liver and diabetes-like conditions caused by a high content of carbohydrate in conventional fish feed compositions can be prevented by the feed composition according to the present invention. Accordingly, it is an important aspect of the present invention that the carbohydrate content is low. Thus, the content hereof is preferably at the most 8 wt%, more preferably at the most 7 wt%, most preferably at the most 6 wt%, including at the most 5 wt% such as at the most 4 wt%. It is particularly preferred that the carbohydrate content is at the most 3 wt%, including at the most 2 wt% or even at the most 1 wt%.

In accordance with the invention the feed composition comprises a water-insoluble emulsifying agent (emulsifier), such as a fatty acid, a mono- di- or triglyceride, an organic ester of monoglycerides, a polyglycerol ester of fatty acids, a propylene glycol ester, a sorbitan ester of fatty acids, a polyoxyethylene sorbitan ester, a sodium stearoyl lactylate, a calcium stearoyl lactylate, a sucrose ester of fatty acids, a sucro-glyceride, a lecithin or a mixture of such emulsifiers.

In specific embodiments the emulsifier is derived from a marine source.

The amount of emulsifying agent is typically in the range of 0.1 to 5 wt%, calculated on the amount of lipid such as in the range of 0.5 to 2 wt%. Based on the finished feed product, the amount of emulsifying agent is typically in the range of 0.05 to 1 wt%. It may be preferred to select an emulsifying agent which is solid at room temperature and having a relatively high melting point such as in the range of 50-60°C. It has been found that by incorporating such an emulsifying agent, the finished feed mixture particles when cooled to ambient temperature set relatively rapidly to provide solid, coherent feed particles which essentially do not disintegrate when administered to the fish breeding environments.

It has been found that the incorporation of an emulsifying agent in the feed composition results in a feed mixture wherein the aqueous phase is evenly distributed in the feed composition as very small droplets which in turn results in less favourable conditions for microbial growth. This implies that the feed composition according to the invention in comparison with feed compositions prepared without the use of an emulsifying agent has an extended shelf life. It has e.g. been observed that it can been stored at a temperature within the range of 5 to 30°C and at low RH for up till six months without growth of fungi occurring on the surface of the particles. In contrast, conventional fish feed compositions kept under the same conditions frequently become mouldy.

In useful specific embodiments of the invention, the feed composition contains a hydrocolloid such as a non-protein hydrocolloid, preferably a polysaccharide of vegetable or microbial origin. In this context, useful hydrocolloids include a gum such as e.g. guar gum, xanthan gum, gum arabic, LBG, gellan gum, a pectin, a carrageenan, an alginate, a starch including starch derivatives and a water soluble cellulose derivative such as CMC.

In accordance with the invention, the feed composition may comprise further ingredients such as water soluble and water-insoluble vitamins, mineral components, flavouring agents or antioxidants such as e.g. ascorbic acid, ascorbyl palmitate, ascorbyl stearate, BHA (butylated hydroxyanisole), BHT (butylated hydroxytoluene), propyl gallate and tocopherols or preserving agents.

A useful source of vitamins and mineral micronutrients is yeast cell mass either in the form a dry yeast or as a liquid yeast cell suspension, i.e yeast cream.

In accordance with the invention, the feed composition can also be supplemented with pharmaceutically active substances. Such active substances typically include antibiotics, vaccines and substances which have a stimulatory effect on the immune system of the growing fish.

Conveniently, the feed composition according to the present invention is in the form of pellets having a largest dimension which is in the range of 1.5-20 mm, the size depending on the type and age of fish for which the feed is intended. In other embodiments, the fish feed composition according to the invention is in the form of granules having a largest dimension which is in the range of 0.2-2 mm.

In a further aspect, the invention provides, as also mentioned above, a method of preparing a fish feed composition, the method comprising as a first step the mixing of a lipid and an emulsifying agent. If it is required to melt the emulsifying agent, the lipid is pre-heated to a temperature above the melting point of the emulsifying agent e.g. to a temperature in the range of about 55-65°C. In a subsequent step, the protein source as defined above is added to the resulting mixture in the form of an aqueous suspension and/or solution or as a slurry of protein. The protein content of the aqueous suspension and/or solution may vary, but is preferably in the range of 10-90 wt%, such as 20 to 80 wt% protein, including a content of 30 to 70 wt% and e.g. from 40 to 60 wt% protein.

The mixture resulting from the above subsequent step is then subjected to emulsifying conditions using a conventional homogenising or an emulsifying apparatus to obtain a water-in-lipid or a lipid-in-water emulsion, depending on the type of emulsifying agent used. Subsequently, the resulting emulsion is formed into particles by a forming process e.g. pelleting at a temperature not exceeding 100°C and, if required, the particles are dried e.g. using air drying, hot air drying, freeze drying or drum drying to obtain the feed composition. However, when a high melting emulsifying agent is used a drying step is generally not required to obtain solid and coherent feed particles.

In a still further aspect, the invention relates to an alternative method for preparing a fish feed composition which method comprises as a first step the preparation of an emulsion comprising a lipid, an aqueous phase and at least one emulsifying agent. The aqueous phase may optionally contain protein in an amounts as mentioned above, i.e. in the range of 10-90 wt%, such as 20 to 80 wt% protein, including a content of 30 to 70 wt% and e.g. from 40 to 60 wt% protein.

In a subsequent step, this emulsion is combined with at least one dry protein-containing ingredient to obtain a fish feed mixture which is subsequently formed and, if required, dried to obtain the fish feed composition.

In either of the above methods, the aqueous suspension and/or solution may also contain at least one further structurizing or consistency controlling ingredient selected from a thickening agent, a viscosity enhancing agent and a stabilizing agent including as an example, a non-protein hydrocolloid such as a polysaccharide of vegetable or microbial origin, preferably a carrageenan or a gum, a wetting agent such as a ketone or an alcohol, preferably ethanol, a flavouring agent such as betaine, a mineral compound and/or a vitamin.

In particular it has been found that the addition of a wetting agent including an alcohol or a ketone to the emulsion mixture facilitates an effective emulsification and subsequent mixing with the other ingredients of the feed composition. A suitable amount of an alcohol or ketone is 5-15 wt% of the emulsion and 1-5 wt%, calculated on the feed composition after mixing. Evidently, part of an added alcohol or ketone will evaporate from the feed composition during mixing and storage of the finished feed composition.

It is an important aspect of the methods according to the invention that the process temperature is low, whereby a deterioration of the dietary quality of the protein and lipid content is avoided and the energy consumption is low. Thus, the processes are preferably carried out at temperatures which are in the range of 10-100°C, preferably at the lowest possible temperatures where efficient mixing of the component can still be attained. Thus, the process temperature may preferably be within a range of 15-80°C such as a range of 20-60°C.

A significant advantage associated with the feed composition according to the present invention is that it results in an increased metabolism or digestibility of proteins as compared to conventional fish feed. It has been found that in comparison with a conventional carbohydrate-containing commercial feed, an increase of the growth rate or weight gain of the fish fed with the feed according to the invention in the order of at least 5 % can be obtained, such as at least 10%.

Furthermore, the high content of lipid will provide a feed with a high energy content resulting in a lower requirement for feed per kg weight gain. It has been found that the feed intake per kg weight gain is reduced by at least 5% and possibly by at least 10%.

The invention will now be described by way of illustration in the following non-limiting examples.

### EXAMPLE 1

### Preparation of a fish feed composition

66.0 kg fish meal, 6.0 kg customized fish meal, 5.0 kg blood meal, 2.5 kg dry yeast and 0.75 kg mixture of vitamins and minerals were mixed under agitation to obtain a homogeneous dry fish feed ingredient mixture. 18.0 kg fish oil was heated under gentle agitation to about 60°C and 0.1 kg Lipodan PBS® (emulsifying agent from Danisco Ingredients, Denmark, vegetable oil based, containing about 20 wt% monoglyceride, dropping point about 62°C) was added and dissolved in the fish oil. 6.0 1 of water and 3.0 1 of ethanol were mixed and added slowly to the fish oil under agitation and emulsifying conditions until a homogenous and stable emulsion was obtained while keeping the temperature above 55°C. The emulsion was applied through nozzles onto a rotating mixture of the dry fish feed ingredients. The resulting fish feed mixture had a loose, non-sticky/pasty consistency, which was readily formed into slightly soft pellets which hardened on cooling to ambient temperature.

The resulting fish feed had the following composition (wt%), based on the total weight of the fish feed:

| | |
|---|---|
| Crude protein | 55.3 |
| Lipid | 25.0 |
| Ashes | 12.0 |
| NFE/carbohydrate | 0.7 |
| Water/moisture | 7.0 |

### EXAMPLE 2

### Preparation of fish feed containing size.

The process was carried out as described in Example 1, but the water was replaced by 6.0 kg of size.

Analysis of the finished fish feed showed the following composition (wt%), based on the total weight of the fish feed:

| | |
|---|---|
| Crude protein | 56.5 |
| Lipid | 24.2 |
| Ashes | 11.6 |
| NFE/carbohydrate | 0.7 |
| Water/moisture | 7.0 |

### EXAMPLE 3

### Preparation of fish feed containing yeast cream

70.0 kg fish meal, 6.0 kg customized fish meal and 5.0 kg blood meal were mixed under agitation to obtain a homogeneous dry fish feed ingredient mixture. 14.0 kg fish oil was heated under gentle agitation to about 60°C and 0.12 kg Lipodan PBS® was added and dissolved in the fish oil. 5.0 kg size, 5.0 kg liquid yeast cream, 0.75 kg of a mixture of vitamins and minerals were mixed with 3.0 1 ethanol and added slowly to the fish oil under agitation and emulsifying conditions until a homogenous and stable emulsion was formed, while keeping the temperature above 55°C. The emulsion was applied through nozzles onto a mixture of dry ingredients. The resulting fish feed mixture had a loose non-sticky/pasty consistency which could readily be formed into slightly soft pellets which hardened on cooling to ambient temperature.

Analysis of the finished fish feed showed the following composition (wt%), based on the total weight of the fish feed:

| | |
|---|---|
| Crude protein | 60.0 |
| Lipid | 20.6 |
| Ashes | 11.7 |
| NFE/carbohydrate | 0.7 |
| Water/moisture | 7.0 |

### EXAMPLE 4

### Preparation of fish feed from semi-manufactured ingredients

64.0 kg of semi-manufactured fish meal (not dried), 8.0 kg semi-manufactured customized fish meal (not dried), 5.0 kg blood meal, 5.0 kg liquid yeast, 0.75 kg of a mixture of vitamins and minerals and 6.0 kg size were mixed under agitation with 3.0 1 ethanol to obtain a wet fish feed mixture. 32.0 kg fish oil was heated under gentle agitation to about 60°C, and 0.3 kg Lipodan PBS® was added and dissolved in the fish oil. The fish oil was slowly added under agitation to the mixture of wet ingredients. The resulting fish feed mixture had a loose non-sticky/pasty consistency and could readily be formed to slightly soft pellets which hardened on subsequent cooling to ambient temperature.

Analysis of the fish feed showed the following composition (wt%), based on the total weight of the fish feed:

| | |
|---|---|
| Crude protein | 40.7 |
| Lipid | 40.0 |
| Ashes | 11.6 |
| NFE/carbohydrate | 0.7 |
| Water/moisture | 7.0 |

## Claims

1. A dry fish feed composition for carnivorous fish, having a composition essentially corresponding to that of the natural prey for said fish, the feed comprising 30-70 wt% of protein, 20-50 wt% of lipid, 0-10 wt% of carbohydrates and a water-insoluble emulsifying agent, the amounts of the components being based on the total weight of the feed.

2. A composition according to claim 1 wherein the combined content of protein and lipid is at the most 80 wt%.

3. A composition according to claim 1 or 2 wherein the carbohydrate content is at the most 8 wt%, preferably at the most 7 wt%, more preferably at the most 6 wt% such as at the most 5 wt%.

4. A composition according to claim 3 wherein the content of carbohydrate is at the most 2 wt%.

5. A composition according to claim 1, wherein the lipid content is in the range of 20-40 wt%.

6. A composition according to claim 1, wherein the lipid is selected from the group consisting of a vegetable lipid and a marine lipid.

7. A composition according to claim 6 wherein the lipid is a fish oil.

8. A composition according to claim 1 wherein the protein content is 40-65 wt%, preferably 45-60 wt% and more preferably 50-60 wt%.

9. A composition according to claim 1 wherein the protein is a non-milk protein.

10. A composition according to any of claims 1-9 which comprises an amount of emulsifying agent, which is in the range of 0.1-5 wt%, calculated on the amount of lipid.

11. A composition according to claim 10 wherein the emulsifying agent is solid at room temperature.

12. A composition according to any of claims 1-11 which further comprises a non-protein hydrocolloid.

13. A composition according to claim 12 wherein the hydrocolloid is a polysaccharide of vegetable or microbial origin.

14. A composition according to claim 1 which is in the form of pellets having a largest dimension which is in the range of 1.5-20 mm.

15. A composition according to claim 1 which is in the form of granules having a largest dimension which is in the range of 0.2-2 mm.

16. A method of preparing a composition according to claim 1, the method comprising
(i) mixing a lipid and a water-insoluble emulsifying agent,
(ii) adding to said mixture the protein in the form of an aqueous suspension and/or solution,
(iii) subjecting the resulting mixture to emulsifying conditions and
(iv) subsequently forming the resulting emulsion into particles, which are subjected to cooling and, if required, drying to obtain the feed composition.

17. A method of preparing a fish feed composition according to claim 1, the method comprising the steps of
(i) preparing an emulsion comprising a lipid, an aqueous phase and a water-insoluble emulsifying agent,
(ii) combining the emulsion with at least one dry fish feed ingredient to obtain a fish feed mixture, and
(iii) subsequently forming the resulting emulsion into particles, which are subjected to cooling and, if required, drying to obtain the feed composition.

18. A method according to claim 17, wherein the aqueous phase contains a protein.

19. A method according to claim 17 wherein the weight ratio between the emulsion and the fish dry ingredient is in the range of 1:9 to 9:1.

20. A method according to claims 16 or 17 wherein the fish feed mixture contains at least one further ingredient selected from the group consisting of a non-protein hydrocolloid, a flavouring agent, a mineral compound and/or a vitamin.

21. A method according to claims 16 or 17, wherein a wetting agent including an agent which is selected from the group consisting of an alcohol and a ketone, is added in step (i).

## Patentansprüche

1. Eine trockene Fischfutterzusammensetzung für Fleisch fressende Fische, mit einer Zusammensetzung, die im Wesentlichen der der natürlichen Beute des Fisches entspricht, wobei das Futter 30-70 Gew.-% Protein, 20-50 Gew.-% Fett, 0-10 Gew.-% Kohlenhydrate und einen wasserunlöslichen Emulgator umfasst, und die Mengen der Bestandteile auf dem Gesamtgewicht des Futters basiert sind.

2. Zusammensetzung nach Anspruch 1, wobei der kombinierte Gehalt an Protein und Fett höchstens 80 Gew.-% beträgt.

3. Zusammensetzung nach Anspruch 1 oder 2, wobei der Kohlenstoffgehalt höchstens 8 Gew.-% beträgt, vorzugsweise höchstens 7 Gew.-%, stärker bevorzugt höchstens 6 Gew.-%, wie etwa höchstens 5 Gew.-%.

4. Zusammensetzung nach Anspruch 3, wobei der Gehalt an Kohlenhydrat höchstens 2 Gew.-% beträgt.

5. Zusammensetzung nach Anspruch 1, wobei der Fettgehalt im Bereich von 20-40 Gew.-% liegt.

6. Zusammensetzung nach Anspruch 1, wobei das Fett ausgewählt ist aus der Gruppe bestehend aus einem pflanzlichen Fett und einem marinen Fett.

7. Zusammensetzung nach Anspruch 6, wobei das Fett ein Fischöl ist.

8. Zusammensetzung nach Anspruch 1, wobei der Proteingehalt 40-65 Gew.-%, vorzugsweise 45-60 Gew.-% und insbesondere bevorzugt 50-60 Gew.-% beträgt.

9. Zusammensetzung nach Anspruch 1, wobei das Protein ein Nicht-Milch-Protein ist.

10. Zusammensetzung nach einem der Ansprüche 1-9, welche eine Menge eines Emulgators umfasst, die im Bereich von 0,1-5 Gew.-% liegt, berechnet auf die Fettmenge.

11. Zusammensetzung nach Anspruch 10, wobei der Emulgator bei Raumtemperatur fest ist.

12. Zusammensetzung nach einem der Ansprüche 1-11, welche ferner ein Nicht-Protein-Hydrokolloid umfasst.

13. Zusammensetzung nach Anspruch 12, wobei das Hydrokolloid ein Polysaccharid pflanzlichen oder mikrobiellen Ursprungs ist.

14. Zusammensetzung nach Anspruch 1, welche in Form von Pellets vorliegt, die eine größte Dimension aufweisen, die im Bereich von 1,5-20 mm liegt.

15. Zusammensetzung nach Anspruch 1, in Form von Granalien mit einer größten Dimension, die im Bereich von 0,2-2 mm liegt.

16. Verfahren zur Herstellung einer Zusammensetzung nach Anspruch 1, wobei das Verfahren umfasst:
i) Mischen eines Fetts und eines wasserunlöslichen Emulgators,
ii) Zusetzen des Proteins in Form einer wässrigen Suspension und/oder Lösung zu der Mischung,
iii) Unterziehen der resultierenden Mischung an emulgierende Bedingungen, und
iv) Nachfolgendes Formen der resultierenden Emulsion zu Teilchen, die einer Kühlung unterzogen werden, und, sofern notwendig, Trocknen, um die Futterzusammensetzung zu erhalten.

17. Verfahren zur Herstellung einer Fischfutterzusammensetzung nach Anspruch 1, wobei das Verfahren die folgenden Schritte umfasst:
i) Herstellen einer Emulsion umfassend ein Fett, eine wässrige Phase und einen wasserunlöslichen Emulgator,
ii) Vereinigen der Emulsion mit mindestens einem Trockenfischfutterbestandteil, um eine Fischfuttermischung zu erhalten, und
iii) Nachfolgendes Formen der resultierenden Emulsion zu Teilchen, die einer Kühlung unterzogen werden, und, sofern notwendig, Trocknen, um die Futterzusammensetzung zu erhalten.

18. Verfahren nach Anspruch 17, wobei die wässrige Phase ein Protein enthält.

19. Verfahren nach Anspruch 17, wobei das Gewichtsverhältnis zwischen der Emulsion und dem Fischtrockenbestandteil im Bereich von 1:9 bis 9:1 liegt.

20. Verfahren nach Anspruch 16 oder 17, wobei die Fischfuttermischung mindestens einen weiteren Bestandteil, ausgewählt aus der Gruppe bestehend aus einem Nicht-Protein-Hydrokolloid, einem Geschmacksstoff, einem Mineralverbindung und/oder einem Vitamin enthält.

21. Verfahren nach Anspruch 16 oder 17, wobei ein Netzmittel einschließlich eines Mittels, ausgewählt aus der Gruppe bestehend aus einem Alkohol und einem Keton bei Schritt i) zugesetzt wird.

## Revendications

1. Composition d'aliments secs pour poissons carnivores, ayant une composition correspondant essentiellement à celle des proies naturelles desdits poissons, l'aliment comprenant de 30 à 70 % en poids de protéines, de 20 à 50 % en poids de lipides, de 0 à 10 % en poids d'hydrates de carbone et un agent émulsifiant non soluble dans l'eau, les quantités des composant étant sur la base du poids total de l'aliment.

2. Composition selon la revendication 1, dans laquelle la teneur combinée de protéines et de lipides est d'au plus 80 % en poids.

3. Composition selon la revendication 1 ou 2, dans laquelle la teneur en hydrates de carbone est d'au plus 8 % en poids, de préférence d'au plus 7 % en poids, plus préférentiellement d'au plus 6 % en poids, comme 5 % en poids au plus.

4. Composition selon la revendication 3, dans laquelle la teneur en hydrate de carbone est d'au plus 2 % en poids.

5. Composition selon la revendication 1, dans laquelle la teneur en lipides est comprise dans la gamme allant de 20 à 40 % en poids.

6. Composition selon la revendication 1, dans laquelle le lipide est sélectionné à partir du groupe constitué d'un lipide végétal et d'un lipide marin.

7. Composition selon la revendication 6, dans laquelle le lipide est de l'huile de poisson.

8. Composition selon la revendication 1, dans laquelle la teneur en protéine est de 40 à 65 % en poids, de préférence de 45 à 60 % en poids et plus préférentiellement de 50 à 60 % en poids.

9. Composition selon la revendication 1, dans laquelle les protéines sont des protéines non laitières.

10. Composition selon l'une quelconque des revendications 1 à 9, qui comprend une quantité d'agent émulsifiant qui est comprise dans la gamme allant de 0,1 à 5 % en poids, calculée sur la base de la quantité de lipide.

11. Composition selon la revendication 10, dans laquelle l'agent émulsifiant est solide à température ambiante.

12. Composition selon l'une quelconque des revendications 1 à 9, comprenant en outre un hydro colloïde non protéine.

13. Composition selon la revendication 12, dans laquelle hydro colloïde est un polysaccharide d'origine végétale ou microbienne.

14. Composition selon la revendication 1, qui est sous la forme de boulettes dont la dimension la plus grande se situe dans la gamme allant de 1,5 à 20 mm.

15. Composition selon la revendication 1, sous la forme de granulés dont la plus grande dimension se situe dans la gamme allant de 0,2 à 2 mm.

16. Procédé de préparation d'une composition selon la revendication 1, ledit procédé consistant à :
(i) mélanger un lipide et un agent émulsifiant non soluble dans l'eau ;
(ii) ajouter audit mélange la protéine sous la forme d'une suspension aqueuse et/ou d'une solution ;
(iii) soumettre le mélange qui en résulte à des conditions d'émulsion ; et
(iv) ensuite mettre l'émulsion qui en résulte sous la fonne de particules qui sont soumises à un refroidissement, et si nécessaire, sécher pour obtenir la composition d'aliment.

17. Procédé de préparation d'une composition d'aliment pour poisson selon la revendication 1, ledit procédé comprenant les étapes consistant à :
(i) préparer une émulsion comprenant un lipide, une phase aqueuse et un agent émulsionnant non soluble dans l'eau ;
(ii) combiner l'émulsion avec au moins un ingrédient sec pour poisson afin d'obtenir un mélange d'aliment pour poisson, et
(iii) ensuite mettre l'émulsion qui en résulte sous la forme de particules qui sont soumises à un refroidissement, et si nécessaire, sécher pour obtenir la composition d'aliment.

18. Procédé selon la revendication 17, dans lequel la phase aqueuse contient une protéine.

19. Procédé selon la revendication 17, dans lequel le rapport en poids entre l'émulsion et l'ingrédient sec pour poisson se situe dans la gamme allant de 1 pour 9 à 9 pour 1.

20. Procédé selon les revendications 16 ou 17, dans lequel le mélange d'aliment pour poison contient au moins un autre ingrédient sélectionné à partir du groupe constitué d'un hydro colloïde non protéine, d'un agent de sapidité, d'un composé minéral et/ou d'une vitamine.

21. Procédé selon les revendications 16 ou 17, dans lequel un agent de mouillage incluant un agent qui est sélectionné à partir du groupe constitué d'un alcool et d'une cétone, est ajouté dans le cadre de l'étape (i).
